# EUROPEAN PATENT SPECIFICATION

(11) **EP 3 001 158 B1**
(45) Date of publication and mention of the grant of the patent: **10.04.2019**
(21) Application number: 14186071.8
(22) Date of filing: 24.09.2014
(51) Int. Cl.: G01G 19/414, B41J 3/36, G01G 23/42, G07G 1/00, B41J 15/04, B41J 3/407, G07G 5/00

(54) **Modular printer for roll paper and label stock**
Modularer Drucker für Rollenpapier und Etikettenrolle
Imprimante modulaire pour rouleau de papier et film à étiquette

(43) Date of publication of application: 30.03.2016
(73) Proprietor: Mettler-Toledo (Albstadt) GmbH, 72458 Albstadt (DE)
(72) Inventor: Kontschak, Dieter, 72474 Winterlingen (DE); Holike, Walter, 72351 Geislingen (DE); Su, Xinwei, 213125 Changzhou (CN); Kempf, Edgar, 72514 Inzigkofen (DE)
(74) Representative: Mettler-Toledo

(56) References cited:
- US-A1- 2005 161 504
- US-A1- 2006 024 107
- US-A1- 2006 272 725

## Description

The invention concerns a printer that prints on roll paper and roll label stock, particularly for use with weighing scales or point-of-sale terminals in retail stores for the printing of weight/price labels, sales receipts and the like. Typically, this kind of printer has the appearance of a compact box with a slot from which the tickets or labels are dispensed. The printer is connected by a data cable to a weighing scale, cash register or other device which generates the information that is to be printed.

The printers that are commonly used with weighing scales or at checkout counters are thermal printers, which are well-proven in this application. The entire printer aggregate, i.e. a module containing the print mechanism and associated controller electronics, can be purchased from specialized printer manufacturers. Thus, the designers and manufacturers of the weighing scales and other devices and systems in which these printers are used have to concern themselves primarily with the aspects of integrating a given printer aggregate into their product.

The state of the art offers numerous examples of printers that work together with weighing scales. A common type of scale printer is configured as a stand-alone unit which is placed in the vicinity of the weighing scale and is typically of a compact, box-shaped design as illustrated, e.g. in US D574,427. A slot through which the labels or receipt tickets are delivered is located in the top surface of the housing, an on/off switch is arranged on a lateral surface, and connector plugs for a power cable and a data cable are arranged on the rear surface of the printer housing. This setup is hereinafter referred to as horizontal operating position. Other printers with a similar setup are described in US 2006/0024107 A1, US2006/0272725 A1 or US2005/0161504 A1.

To save space or also to protect the printer from contamination, for example on a meat counter, a printer may also be arranged in a vertical operating position at an elevated location, for example attached to a support column which carries the operator panel and the customer display. In the vertical operating position, the exit slot for labels or other transaction records is located in the front surface of the housing, i.e. facing the operator. It is also conceivable to mount a printer in vertical operating position on a wall.

There are certain practical requirements that a roll printer must meet regardless of its operating position. First, the process of loading a new label- or paper roll needs to be an elementary operation which can be performed in a quick, fail-safe way without special training. Second, as the printed labels or receipts leave the exit slot and are taken out by hand, the side with the printed information must face the operator. Also, the printed text should come out correctly oriented, so that a label or ticket taken off the printer can be read immediately without first having to be turned right side up.

Although a printer for use in a horizontal operating position and a printer for use in a vertical operating position may present the same outward appearance of a box-shaped enclosure with a paper exit slot, printers of the existing state of the art are not interchangeable between the two operating positions, i.e. a printer designed for use in a horizontal operating position is not operable in a vertical operating position, and vice versa. Accordingly, different types of printers are used depending on the position in which the printer needs to operate.

This is primarily due to the difficulty of designing a single type of printer which would meet both of the two aforementioned requirements in either of the two positions. For example, inserting a new roll into the paper roll compartment would have to be equally quick and convenient whether the same printer is set up in a horizontal or vertical position. Furthermore, in either of the two operating positions the printed labels or tickets should come out of the exit slot face-up, and the information should present itself to the operator in the correct orientation.

The present invention therefore has the objective to provide a printer for roll paper and roll label stock, which is designed as a module or building block that can be used with different weighing scales and checkout systems, where the same printer module may be installed on different supporting structures and in different operating positions, specifically in a horizontal operating position or in a vertical operating position. Most importantly, this modular printer should be operable with equal convenience in either operating position.

This task is solved by a printer according to the independent main claim 1. Further configurations and embodiments of the subject of the invention are presented in the subordinate claims.

A printer for paper roll and label roll stock has an essentially box-shaped housing with main walls, side walls and end walls, with a fixed housing part and a hinged swing-out housing part, a roll compartment enclosed between the fixed housing part and the swing-out housing part, and an exit slot in one of the main walls in the form of a straight-line parting gap separating the fixed housing part and the swing-out housing part. A printhead is arranged in the fixed housing part near the exit slot. The hinge axis of the swing-out housing part is located in one of the end walls and runs parallel to the cylinder axis of the paper- or label roll. According to the invention, the printer is designed as a module or building block that can be used with different weighing scales and checkout systems, where the same printer module may be installed on different supporting structures and in different operating positions, specifically in a horizontal operating position or in a vertical operating position. In the horizontal operating position, the main wall with the exit slot is facing upward and the end wall containing the hinge of the swing-out housing part is facing away from the operator. In the vertical operating position, the main wall with the exit slot is facing the operator in a horizontal direction and the end wall with the hinge is located at the bottom of the printer housing. In the horizontal operating position, to load a paper- or label roll into the printer, the hinged housing part can be tilted upward and away from the operator, allowing the roll to be laid into a first roll cradle that is formed in the bottom of the fixed housing part. In the vertical operating position of the printer, the hinged housing part can be tilted forward and towards the operator, allowing the roll to be laid into a second roll cradle that is formed in the swing-out housing part. In either operating position, the roll is laid into the respective roll cradle so that the print side of the paper ribbon running tangentially off the roll faces toward the printhead.

According to the invention, the modular printer is equipped with a width-adjustable paper guide mechanism with lateral paper guides. If the printer is set up for the horizontal operating position, the paper guide mechanism is installed in the fixed housing part with the lateral paper guides flanking the first roll cradle. If the printer is set up for the vertical operating position, the paper guide mechanism is installed in the swing-out housing part with the lateral paper guides flanking the second roll cradle.

In a preferred embodiment of the invention, the modular printer is equipped with a first and a second paper transport roller. The first paper transport roller is driven by a roller drive source and mounted in the fixed housing part near the exit slot. The second paper transport roller is arranged on the swing-out housing part near the exit slot and is driven by pressure contact engagement with the first paper transport roller through the paper- or label strip moving between the transport rollers.

Alternatively, in a modular printer equipped with a first and a second paper transport roller, a first gear connected to one end of the first transport roller engages a second gear connected to the corresponding end of the second transport roller, whereby the rotary movements of the first and second transport rollers are positively locked to each other.

Preferably, the modular printer is capable of printing in different text orientations, i.e. top to bottom, bottom to top, as well as sideways, so that information printed in so-called portrait orientation, i.e. transverse to the transport direction of the paper, can be read in the correct upright orientation already while the ticket or label is moving out of the exit slot. For the horizontal operating position of the printer, where the ticket or label leaves the exit slot in the upward direction, text in portrait orientation should thus be printed top to bottom. For the vertical operating position on the other hand, where the ticket or label leaves the exit slot in the downward direction, the same text should be printed bottom to top, so that the last print line appears first out of the exit slot.

The swing-out housing part preferably has a snap lock with a finger-pull lever, so that the paper roll compartment can be opened by pulling the lever and closed by applying manual pressure to the housing part.

A modular printer according to a preferred embodiment of the invention is connected to a supporting structure through an electromechanical plug-in connector which secures the modular printer on the supporting structure and simultaneously provides the electrical connection to deliver power to the printer and transmit data between the printer and another module such as a weighing scale or a cash register. Thus, the printer can be mechanically installed on the supporting structure and simultaneously made electrically operative through an elementary straight-line plug-in movement of the printer relative to the supporting structure. Likewise, the printer can be uninstalled through a reverse straight-line movement of the printer relative to the supporting structure.

In an advantageous embodiment of the invention, the mechanical connection has the form of a plug-in carrier arm that enters into a corresponding socket recess of the printer. The plug-in carrier arm and the socket recess are of a complementary, mutually conforming shape to allow a form-fitting, keyed mechanical plug-in engagement of the plug-in carrier arm in the socket recess. The keyed configuration of the plug-in carrier arm and the socket recess ensure that the printer can be slid onto the plug-in carrier arm only in a precisely defined rotational orientation of the printer relative to the plug-in carrier arm, and that the printer remains immovably secured in the defined position on the plug-in carrier arm.

In preferred arrangements of the printer according to the invention the supporting structure includes a substantially vertical support column to which the plug-in carrier arm is attached, standing out horizontally from the support column. Relative to its horizontal longitudinal axis, the carrier arm is rotationally oriented to hold the modular printer in the vertical operating position.

In a configuration that is sometimes referred to as a compact retail scale, the printer is attached directly to the chassis base of the scale. According to the invention, the attachment can in this case be realized with a plug-in carrier arm that is connected directly to the chassis base, standing out horizontally from the latter, wherein the carrier arm is rotationally oriented to hold the modular printer in the horizontal or moderately inclined operating position.

In other preferred embodiments in addition to the aforementioned plug-in arrangements, the modular printer also includes wall-mounting elements to releasably attach the printer to a wall in the vertical operating position and to provide the power- and data connections to the wall-mounted modular printer.

Preferably, the possible operating configurations of the modular printer include a free-standing setup in the horizontal operating position on a counter or table surface. The modular printer can be equipped for this purpose with connector plugs for a power cable and a data cable.

Details of the scale printer according to the invention are explained in the description of the examples that are illustrated in the drawings, wherein
- Fig. 1: represents a modular printer according to the invention in a free-standing horizontal operating position resting on a level work surface;
- Fig. 2: shows the modular printer according to the invention in a vertical operating position attached to a display column of a retail scale;
- Fig. 3: represents the modular printer according to the invention in the horizontal operating position, with the paper roll compartment opened, ready to load a paper or label roll;
- Fig. 4: shows the printer of Fig. 3, with the paper roll compartment opened and a new paper roll set in place; and
- Fig. 5: shows the printer according to the invention in the vertical operating position, with the paper roll compartment opened and a new paper roll set in place.

In the following, elements of the printer that are identical from one drawing to the next are identified by the same reference symbols.

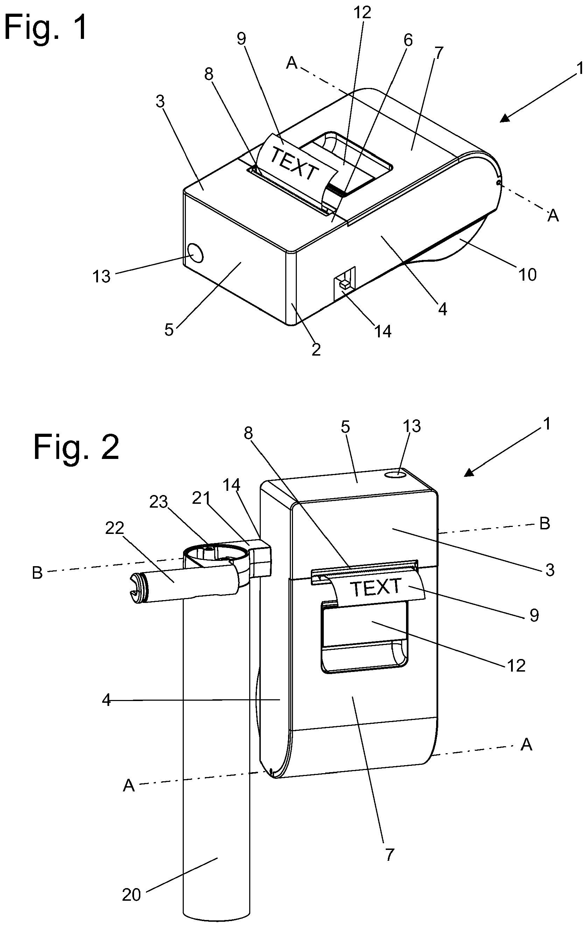

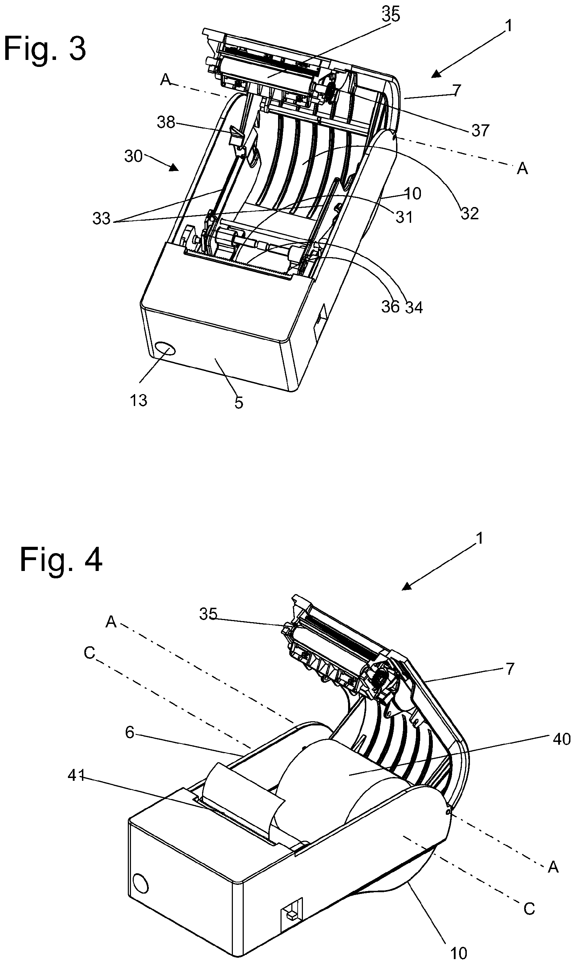

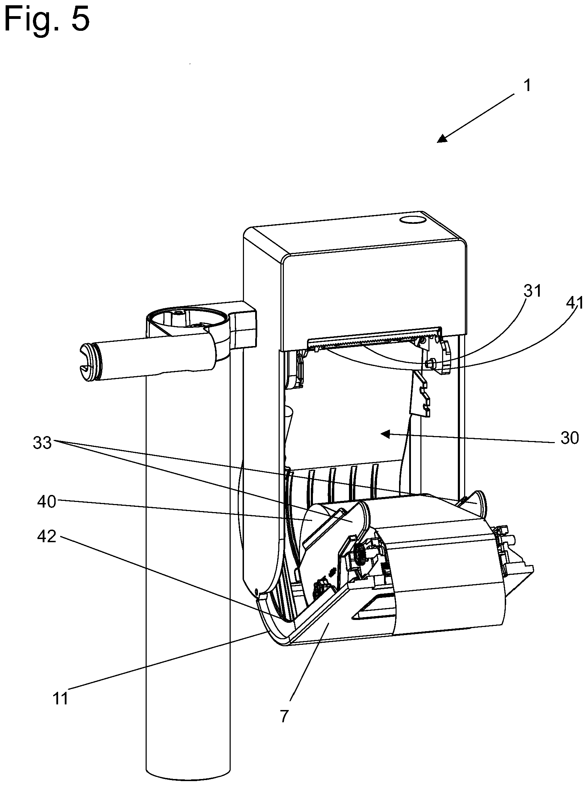

Figure 1 shows a modular printer 1 according to the invention in a free-standing horizontal operating position resting on a level work surface. The printer 1 has a housing 2 with main walls 3 located (in Figure 1) at the top and bottom of the housing 2, sidewalls 4 facing to the right and left, and end walls 5 facing towards and away from the operator. The rounded contour shapes 10 and 11 follow internal contours of a paper/label roll compartment 30 which will be explained in the context of Figures 3 and 5. The housing 2 has a stationary part 6 and a swing-out housing part 7 which can be unlocked and swung upward about a hinge axis A-A by reaching with a finger below the finger-pull lever 12 and pulling up on the latter. An exit slot 8 for the printed receipts or labels 9 is located at the parting line between the stationary housing part 6 and the swing-out housing part 7. The word "TEXT" illustrates the position and orientation of the printed information on the label 9 as the latter comes out of the slot 8. An on/off switch 13 in the end wall 5 and a plug-in socket recess 14 in the sidewall 4 are symbolically indicated in the drawing.

Figure 2 illustrates how the same printer 1 presents itself in the vertical operating position, attached to a display support column 20 of a retail scale. The connection between the support column 20 and the printer 1 is a plug-in connection wherein the printer 1 is slid with its plug-in socket recess 14 along the carrier arm axis B-B onto a horizontal plug-in carrier arm 21. The carrier arm 21 and the socket recess 14 have mutually conforming keyed profiles, so that the printer 1 can be mounted on the carrier arm 21 only in the correct vertical position. Also shown in the drawing is a further carrier arm 22 for an operator panel or display screen of the retail scale. The support column 20 has a hollow cylindrical profile providing an enclosed passage 23 for power and data cables to the printer 1 and other units mounted on the support column 20.

In the vertical operating position, the end wall 5 with the on/off switch 13 is located at the top, while the hinge axis A-A of the swing-out housing part 7 is located at the bottom of the printer housing. The main wall 3 with the exit slot 8 faces the operator. As indicated by the word "TEXT", the orientation of the printed information on the ticket or label 9 is reversed in comparison to Figure 1, so that the information is immediately legible as the ticket or label 9 moves out of the exit slot 8.

Figure 3 shows the modular printer 1 according to the invention in the horizontal operating position, with the paper roll compartment 30 opened, ready to load a paper or label roll. The swing-out housing part 7 is held in its raised position by a holding latch 38. A first paper roll cradle 32 is formed in the bottom (relative to the orientation of Figure 3) of the paper roll compartment 30, i.e. in the area of the rounded outside contour 10. A width-adjustable paper guide mechanism which allows paper and label rolls of different widths to be used in the printer 1 is installed in the stationary part 6 of the printer housing 2 with the paper guides 33 flanking the first paper roll cradle 32. A thermal printhead 31 and a first paper transport roller 34 that is solidly connected to a first gear 36 are arranged in the fixed housing part 6 near the exit slot 8, but are not directly visible in the drawing. The first paper transport roller 34 is driven by a motor (not visible) which is arranged in the stationary housing part 6. A second transport roller 35 with a rotationally connected second gear 37 is arranged on the swing-out housing part 7. When the swing-out housing part 7 is closed, the second gear 37 is brought into meshing engagement with a first gear 36, so that the rotary movements of the two transport rollers 34 and 35 are locked together and are both driven by the aforementioned motor (not shown in the drawing).

Figure 4 shows the printer of Fig. 3 with a new paper roll 40 set in place. The roll 40 is simply laid into the first paper cradle 32 with the spooled-off end at the bottom of the roll 40 and directed towards the operator. After the swing-out housing part 7 has been snapped shut on the stationary housing part 6, the printer 1 is back in operation.

Figure 5 shows the modular printer (1) according to the invention in the vertical operating position, with the paper roll compartment 30 opened and a new paper roll 40 set in place. In comparison to Figure 4 where the printer (1) is in its horizontal operating position, there are some significant differences, namely:
- The same width-adjustable paper guide mechanism is installed in the swing-out part 7 of the printer housing 2 with the paper guides 33 flanking the second paper roll cradle 42.
- The new paper roll is placed into the second paper roll cradle 42 which is formed in the swing-out housing part 7 in the area of the rounded outside contour 11.
- The roll 40 is laid into the second paper cradle 42 with the spooled-off end at the top of the roll 40 and directed towards the operator.
- If the text on the label or ticket 9 is printed in the so-called portrait orientation, i.e. transverse to the transport direction of the paper, the orientation of the printed text on the label or ticket 9 is turned 180°.

Except for the relocated paper guide mechanism, all other elements of the printer 1, for example the printhead 31 and the tear-off blade 41, stay in the same place when the printer 1 is converted from a horizontal to a vertical operating position.

Although the invention has been described through the presentation of specific examples, it will be evident to the reader that numerous further variant embodiments could be developed. As an example, the plug-in carrier arm 21 could be configured so that it could be connected directly to the side of the chassis base of a weighing platform unit, so that the printer would be positioned at the level of the weighing platform unit instead of being elevated on a support column. While the applicants have developed the modular printer with a view to its use with a weighing scale, it should be obvious that the use of the invention is not limited to the weighing field, but that the invention covers any printer that is convertible between a plurality of operating positions in the manner described herein. Also, it should be emphasized that the invention is not limited to the shapes and proportions of the elements shown in the drawings, but that the inventive concept could be fully realized with shapes and proportions different from those shown in the illustrations.

### List of Reference Symbols

- 1: modular printer
- 2: printer housing
- 3: main wall
- 4: side wall
- 5: end wall
- 6: fixed housing part
- 7: hinged swing-out housing part
- 8: exit slot
- 9: ticket, label
- 10: rounded outside contour of first paper roll cradle
- 11: rounded outside contour of second paper roll cradle
- 12: finger-pull lever
- 13: on-off switch/button
- 14: plug-in socket recess
- 20: support column
- 21: plug-in carrier arm for printer
- 22: plug-in carrier arm for operator panel
- 23: hollow passage inside support column
- 30: paper/label roll compartment
- 31: printhead
- 32: first paper roll cradle
- 33: lateral paper guides
- 34: first paper transport roller
- 35: second paper transport roller
- 36: first gear
- 37: second gear
- 38: holding latch for hinged swing-out housing part
- 40: paper/label roll
- 41: tear-off blade
- 42: second paper roll cradle
- A-A: hinge axis of swing-out housing part 7
- B-B: longitudinal axis of plug-in carrier arm 21, plug-in axis
- C-C: axis of rotation of paper/label roll

## Claims

1. Printer (1) for paper roll and label roll stock (40), comprising a substantially box-shaped housing (2) with main walls (3), side walls (4) and end walls (5), with a fixed housing part (6) and a hinged swing-out housing part (7), a paper/label roll compartment (30) enclosed between the fixed housing part (6) and the swing-out housing part (7), and an exit slot (8) in one of the main walls (3) in the form of a straight-line parting gap separating the fixed housing part (6) and the swing-out housing part (7), and with a printhead (31) arranged in the fixed housing part (6) near the exit slot (8), wherein a hinge axis (A-A) of the swing-out housing part (7) is located in one of the end walls and runs parallel to the axis of rotation (C-C) of the paper- or label roll (40), wherein the printer (1) is designed as a module or building block for use with different weighing scales and checkout systems where the same printer module (1) may be installed on different supporting structures (20) and in different operating positions, specifically in a horizontal operating position where the main wall (3) with the exit slot (8) is facing upward and the end wall containing the hinge axis (A-A) is facing away from the operator, and in a vertical operating position where the main wall (3) with the exit slot (8) is oriented vertically and facing the operator, with the end wall containing the hinge axis (A-A) being located at the bottom of the printer housing (2), wherein in the horizontal operating position, to load a paper- or label roll (40) into the printer (1), the hinged housing part (7) can be tilted upward and away from the operator, allowing the roll (40) to be laid into a first roll cradle (32) that is formed in the bottom of the fixed housing part (6), and wherein in the vertical operating position of the printer (1), the hinged housing part (7) can be tilted forward and towards the operator, allowing the roll (40) to be laid into a second roll cradle (42) that is formed in the swing-out housing part (7) **characterized in that** the printer (1) further comprising a width-adjustable paper guide mechanism with lateral paper guides (33), where when the printer (1) is set up for the horizontal operating position, the paper guide mechanism is installed in the fixed housing part (6) with the lateral paper guides (33) flanking the first paper roll cradle (32), and when the printer (1) is set up for the vertical operating position, the paper guide mechanism is installed in the swing-out housing part (7) with the lateral paper guides (33) flanking the second roll cradle (42).

2. The printer (1) according to claim 1, further comprising a first and a second paper transport roller (34, 35), **characterized in that** the first paper transport roller (34) is arranged in the fixed housing part (6) near the exit slot and is driven by a roller drive source, and that the second paper transport roller (35) is arranged on the swing-out housing part (7) near the exit slot (8) and is driven by pressure contact engagement with the first paper transport roller (34), as the paper- or label strip moves between the transport rollers (34, 35).

3. The printer (1) according to claim 1, further comprising a first and a second paper transport roller (34, 35), **characterized in that** a first gear (36) which is connected to one end of the first transport roller (34) engages a second gear (37) which is connected to the corresponding end of the second transport roller (35), whereby the rotary movements of the first and second transport rollers (34, 35) are positively locked to each other.

4. The printer (1) according to one of the preceding claims, **characterized in that** the printer (1) is capable of printing in different text orientations so that the printed information can be read in the correct upright orientation already while the ticket or label (9) is moving out of the exit slot (8).

5. The printer (1) according to one of the preceding claims, **characterized in that** the swing-out housing part (7) comprises a snap lock with a finger-pull lever (12), so that the paper roll compartment (30) can be opened by pulling the lever (12) and closed by applying manual pressure to the swing-out housing part (7).

6. The printer (1) according to one of the preceding claims, **characterized in that** the printer (1) is connected to a supporting structure through an electromechanical plug-in connector which secures the printer (1) on the supporting structure and simultaneously provides the electrical connection to deliver power to the printer and transmit data between the printer and another module.

7. The printer (1) according to claim 6, **characterized in that** the electromechanical plug-in connector has the form of a plug-in carrier arm (21) that enters into a corresponding socket recess (14) of the printer (1), wherein the plug-in carrier arm (21) and the socket recess (14) are of a complementary, mutually conforming shape to allow a form-fitting, keyed mechanical plug-in engagement of the plug-in carrier arm (21) in the socket recess (14).

8. The printer (1) according to claim 7, **characterized in that** the supporting structure comprises a substantially vertical support column (20) to which the plug-in carrier arm (21) is attached, standing out horizontally from the support column (20), and that relative to its horizontal longitudinal axis (B-B), the carrier arm (21) is rotationally oriented to hold the modular printer (1) in the vertical operating position.

9. The printer (1) according to claim 7, **characterized in that** the supporting structure comprises the chassis base of a weighing scale, and that the plug-in carrier arm (21) is connected directly to the chassis base, standing out horizontally from the latter, wherein the carrier arm is rotationally oriented to hold the modular printer (1) in the horizontal or a moderately inclined operating position.

10. The printer (1) according to one of the claims 1 to 5, **characterized in that** the printer (1) comprises wall-mounting elements to releasably attach the printer (1) to a wall in the vertical operating position and to provide the power- and data connections to the wall-mounted printer (1).

11. The printer (1) according to one of the claims 1 to 5, **characterized in that** the printer (1) is further operable in a free-standing setup in the horizontal operating position on a counter or table surface, and that the printer (1) is equipped for this purpose with connector plugs for a power cable and a data cable.

## Patentansprüche

1. Drucker (1) für Papierrollen- und Etikettenrollenmaterial (40), umfassend ein im Wesentlichen kastenförmiges Gehäuse (2) mit Hauptwänden (3), Seitenwänden (4) und Endwänden (5), mit einem festen Gehäuseteil (6) und einem mittels eines Gelenks ausschwenkenden Gehäuseteil (7), einem Papier-/Etikettenrollenfach (30), das zwischen dem festen Gehäuseteil (6) und dem ausschwenkenden Gehäuseteil (7) eingeschlossen ist, und einem Austrittsschlitz (8) in einer der Hauptwände (3) in Form einer geradlinigen Trennfuge, die den festen Gehäuseteil (6) und den ausschwenkenden Gehäuseteil (7) trennt, und mit einem Druckkopf (31), der in dem festen Gehäuseteil (6) nahe dem Austrittsschlitz (8) angeordnet ist, wobei sich eine Gelenkachse (A-A) des ausschwenkenden Gehäuseteils (7) in einer der Endwände befindet und parallel zu der Drehachse (C-C) der Papier- oder Etikettenrolle (40) verläuft, wobei der Drucker (1) als ein Modul oder Bauelement zur Verwendung mit unterschiedlichen Wiege- und Warenausgabesystemen ausgestaltet ist, bei denen das gleiche Druckermodul (1) an unterschiedlichen Stützstrukturen (20) und in unterschiedlichen Betriebspositionen installiert sein kann, insbesondere in einer horizontalen Betriebsposition, in der die Hauptwand (3) mit dem Austrittsschlitz (8) nach oben gewandt ist und die Endwand, welche die Gelenkachse (A-A) enthält, vom Bediener abgewandt ist, und in einer vertikalen Betriebsposition, in der die Hauptwand mit dem Austrittsschlitz (8) vertikal ausgerichtet und dem Bediener zugewandt ist, wobei sich die Endwand, welche die Gelenkachse (A-A) enthält am Boden des Druckergehäuses (2) befindet, wobei in der horizontalen Betriebsposition der mit einem Gelenk versehene Gehäuseteil (7) zum Laden einer Papier- oder Etikettenrolle (40) in den Drucker (1) nach oben und weg von dem Bediener gekippt werden kann, wodurch ermöglicht wird, dass die Rolle (40) in eine erste Rollenaufnahmevorrichtung (32) gelegt wird, die im Boden des festen Gehäuseteils (6) gebildet ist, und wobei in der vertikalen Betriebsposition des Druckers (1) der mit einem Gelenk versehene Gehäuseteil (7) nach vorn und in Richtung des Bedieners gekippt werden kann, wodurch ermöglicht wird, dass die Rolle (40) in eine zweite Rollenaufnahmevorrichtung (42) gelegt wird, die in dem ausschwenkenden Gehäuseteil (7) gebildet ist, **dadurch gekennzeichnet, dass** der Drucker (1) ferner einen breitenverstellbaren Papierführungsmechanismus mit seitlichen Papierführungen (33) umfasst, wobei der Papiermechanismus, wenn der Drucker (1) für die horizontale Betriebsposition eingerichtet ist, in dem festen Gehäuseteil (6) installiert ist, wobei die seitlichen Papierführungen (33) die erste Papierrollenaufnahmevorrichtung (32) flankieren, und der Papierführungsmechanismus, wenn der Drucker (1) für die vertikale Betriebsposition eingerichtet ist, in dem ausschwenkenden Gehäuseteil (7) installiert ist, wobei die seitlichen Papierführungen (33) die zweite Rollenaufnahmevorrichtung (42) flankieren.

2. Drucker (1) nach Anspruch 1, ferner umfassend eine erste und eine zweite Papiertransportrolle (34, 35), **dadurch gekennzeichnet, dass** die erste Papiertransportrolle (34) in dem festen Gehäuseteil (6) nahe dem Austrittsschlitz angeordnet ist und durch eine Rollenantriebsquelle angetrieben wird, und dass die zweite Papiertransportrolle (35) an dem ausschwenkenden Gehäuseteil (7) nahe dem Austrittsschlitz (8) angeordnet ist und durch Druckkontakteingriff mit der ersten Papiertransportrolle (34) angetrieben wird, während sich der Papier- oder Etikettenstreifen zwischen den Transportrollen (34, 35) bewegt.

3. Drucker (1) nach Anspruch 1, ferner umfassend eine erste und eine zweite Papiertransportrolle (34, 35), **dadurch gekennzeichnet, dass** ein erstes Zahnrad (36), das mit einem Ende der ersten Transportrolle (34) verbunden ist, in Eingriff mit einem zweiten Zahnrad (37) steht, das mit dem entsprechenden Ende der zweiten Transportrolle (35) verbunden ist, wodurch die Drehbewegungen der ersten und der zweiten Transportrolle (34, 35) miteinander formschlüssig sind.

4. Drucker (1) nach einem der vorhergehenden Ansprüche, **dadurch gekennzeichnet, dass** der Drucker (1) in der Lage ist, in unterschiedlichen Textausrichtungen zu drucken, sodass die gedruckten Informationen in der korrekten aufrechten Ausrichtung bereits dann gelesen werden können, wenn das Preisschild oder Etikett (9) aus dem Austrittschlitz (8) austritt.

5. Drucker (1) nach einem der vorhergehenden Ansprüche, **dadurch gekennzeichnet, dass** der ausschwenkende Gehäuseteil (7) einen Schnappverschluss mit einem Fingerzughebel (12) umfasst, sodass das Papierrollenfach (30) geöffnet werden kann, indem an dem Hebel (12) gezogen wird, und geschlossen werden kann, indem mit der Hand Druck auf den ausschwenkenden Gehäuseteil (7) ausgeübt wird.

6. Drucker (1) nach einem der vorhergehenden Ansprüche, **dadurch gekennzeichnet, dass** der Drucker (1) mit einer Stützstruktur durch einen elektromechanischen Steckverbinder verbunden ist, der den Drucker (1) an der Stützstruktur sichert und gleichzeitig die elektrische Verbindung zum Zuführen von Strom zu dem Drucker und zum Übertragen von Daten zwischen dem Drucker und einem anderen Modul bereitstellt.

7. Drucker (1) nach Anspruch 6, **dadurch gekennzeichnet, dass** der elektromechanische Steckverbinder die Form eines Stecktragarms (21) aufweist, der in eine entsprechende Buchsenvertiefung (14) des Druckers (1) eintritt, wobei der Stecktragarm (21) und die Buchsenvertiefung (14) eine komplementäre, gegenseitig zusammenpassende Form aufweisen, um einen formschlüssigen, verkeilten mechanischen Steckeingriff des Stecktragarms (21) in der Buchsenvertiefung (14) zu ermöglichen.

8. Drucker (1) nach Anspruch 7, **dadurch gekennzeichnet, dass** die Stützstruktur eine im Wesentlichen vertikale Stützsäule (20) aufweist, an welcher der Stecktragarm (21) angebracht ist, wobei dieser horizontal von der Stützsäule (20) absteht, und dass der Tragarm (21) relativ zu seiner horizontalen Längsachse (B-B) drehbar ausgerichtet ist, um den modularen Drucker (1) in der vertikalen Betriebsposition zu halten.

9. Drucker (1) nach Anspruch 7, **dadurch gekennzeichnet, dass** die Stützstruktur die Gestellbasis einer Waage umfasst und dass der Stecktragarm (21) direkt mit der Gestellbasis verbunden ist, wobei er horizontal von dieser absteht, wobei der Tragarm drehbar ausgerichtet ist, um den modularen Drucker (1) in der horizontalen oder einer mäßig geneigten Betriebsposition zu halten.

10. Drucker (1) nach einem der Ansprüche 1 bis 5, **dadurch gekennzeichnet, dass** der Drucker (1) Wandmontageelemente umfasst, um den Drucker (1) lösbar an einer Wand in der vertikalen Betriebsposition anzubringen und dem an der Wand montierten Drucker (1) die Strom- und Datenverbindungen bereitzustellen.

11. Drucker (1) nach einem der Ansprüche 1 bis 5, **dadurch gekennzeichnet, dass** der Drucker (1) ferner in einer freistehenden Einrichtung in der horizontalen Betriebsposition auf einem Tresen oder einer Tischfläche betrieben werden kann und dass der Drucker (1) zu diesem Zweck mit Verbindungssteckern für ein Stromkabel und ein Datenkabel ausgestattet ist.

## Revendications

1. Imprimante (1) pour rouleau de papier et rouleau d'étiquettes (40), comprenant un boîtier (2) sensiblement en forme de boîte avec des parois principales (3), des parois latérales (4) et des parois d'extrémité (5), avec une partie de boîtier fixe (6) et une partie de boîtier pivotante articulée (7), un compartiment de rouleau de papier/étiquettes (30) enfermé entre la partie de boîtier fixe (6) et la partie de boîtier pivotante (7), et une fente de sortie (8) dans l'une des parois principales (3) sous la forme d'un interstice de partition en ligne droite séparant la partie de boîtier fixe (6) et la partie de boîtier pivotante (7), et avec une tête d'impression (31) agencée dans la partie de boîtier fixe (6) proche de la fente de sortie (8), dans laquelle un axe de charnière (A-A) de la partie de boîtier pivotante (7) est situé dans l'une des parois d'extrémité et est parallèle à l'axe de rotation (C-C) du rouleau de papier ou d'étiquettes (40), l'imprimante (1) étant conçue comme un module ou un bloc de construction destiné à être utilisé avec différentes balances de pesage et systèmes de caisse, où le même module d'imprimante (1) pouvant être installé sur différentes structures de support (20) et dans différentes positions de fonctionnement, notamment dans une position de fonctionnement horizontale où la paroi principale (3) avec la fente de sortie (8) est tournée vers le haut et la paroi d'extrémité contenant l'axe de charnière (A-A) est opposée à l'opérateur, et dans une position de fonctionnement verticale où la paroi principale (3) avec la fente de sortie (8) est orientée verticalement et face à l'opérateur, la paroi d'extrémité contenant l'axe de charnière (A-A) étant située au bas du boîtier de l'imprimante (2), dans lequel, dans la position de fonctionnement horizontale, pour charger un rouleau de papier ou d'étiquettes (40) dans l'imprimante (1), la partie de boîtier articulée (7) peut être inclinée vers le haut et à l'opposé de l'opérateur, permettant ainsi l'insertion du rouleau (40) dans un premier berceau de rouleau (32) qui est formé dans le bas de la partie de boîtier fixe (6), et dans lequel, dans la position de fonctionnement verticale de l'imprimante (1), la partie de boîtier articulée (7) peut être inclinée vers l'avant et vers l'opérateur, permettant au rouleau (40) d'être déposé dans un second berceau de rouleau (42) qui est formé dans la partie de boîtier pivotante (7), **caractérisée en ce que** l'imprimante (1) comprend en outre un mécanisme de guidage de papier réglable en largeur avec des guidages de papier latéraux (33), où, lorsque l'imprimante (1) est configurée pour la position de fonctionnement horizontale, le mécanisme de guidage de papier est installé dans la partie de boîtier fixe (6) avec les guidages de papier latéraux (33) encadrant le premier berceau du rouleau de papier (32), et lorsque l'imprimante (1) est configurée pour la position de fonctionnement verticale, le mécanisme de guidage de papier est installé dans la partie de boîtier pivotante (7) avec les guidages de papier latéraux (33) encadrant le second berceau de rouleau (42).

2. Imprimante (1) selon la revendication 1, comprenant en outre un premier et un second rouleau de transport de papier (34, 35), **caractérisée en ce que** le premier rouleau de transport de papier (34) est agencé dans la partie de boîtier fixe (6) à proximité de la fente de sortie et est entraîné par une source d'entraînement de rouleau, et que le second rouleau de transport de papier (35) est agencé sur la partie de boîtier pivotante (7) près de la fente de sortie (8) et est entraîné, par une mise en prise par contact de pression, avec le premier rouleau de transport de papier (34), lorsque la bande de papier ou d'étiquettes se déplace entre les rouleaux de transport (34, 35).

3. Imprimante (1) selon la revendication 1, comprenant en outre un premier et un second rouleau de transport de papier (34, 35), **caractérisée en ce qu'**un premier engrenage (36) qui est connecté à une extrémité du premier rouleau de transport (34) met en prise un second engrenage (37) qui est relié à l'extrémité correspondante du second rouleau de transport (35), moyennant quoi les mouvements de rotation des premier et second rouleaux de transport (34, 35) sont verrouillés positivement l'un à l'autre.

4. Imprimante (1) selon l'une des revendications précédentes, **caractérisée en ce que** l'imprimante (1) est capable d'imprimer dans différentes orientations du texte de sorte que les informations imprimées peuvent être lues dans l'orientation verticale correcte dès que le ticket ou l'étiquette (9) sort de la fente de sortie (8).

5. Imprimante (1) selon l'une des revendications précédentes, **caractérisée en ce que** la partie de boîtier pivotante (7) comprend un verrou à cliquet avec un levier à tirer (12), de sorte que le compartiment de rouleau de papier (30) peut être ouvert par le fait de tirer sur le levier (12), et fermé par l'application d'une pression manuelle sur la partie de boîtier pivotante (7).

6. Imprimante (1) selon l'une des revendications précédentes, **caractérisée en ce que** l'imprimante (1) est connectée à une structure de support par l'intermédiaire d'un connecteur enfichable électromécanique qui fixe l'imprimante (1) sur la structure de support et fournit simultanément la liaison électrique pour alimenter l'imprimante en énergie et transmettre des données entre l'imprimante et un autre module.

7. Imprimante (1) selon la revendication 6, **caractérisée en ce que** le connecteur enfichable électromécanique présente la forme d'un bras de support enfichable (21) qui pénètre dans un évidement de douille (14) correspondant de l'imprimante (1), dans lequel le bras de support enfichable (21) et l'évidement de douille (14) présentent une forme complémentaire, se conformant mutuellement, pour permettre un engagement enfichable mécanique verrouillé, par correspondance de forme, du bras de support enfichable (21) dans l'évidement de douille (14).

8. Imprimante (1) selon la revendication 7, **caractérisée en ce que** la structure de support comprend une colonne de support sensiblement verticale (20) à laquelle le bras de support enfichable (21) est fixé, s'étendant horizontalement à partir de la colonne de support (20), et que, par rapport à son axe longitudinal horizontal (B-B), le bras de support (21) est orienté en rotation pour maintenir l'imprimante modulaire (1) dans la position de fonctionnement verticale.

9. Imprimante (1) selon la revendication 7, **caractérisée en ce que** la structure de support comprend la base de châssis d'une balance de pesage, et que le bras de support enfichable (21) est connecté directement à la base de châssis, en s'écartant horizontalement de cette dernière, dans laquelle le bras de support est orienté en rotation pour maintenir l'imprimante modulaire (1) dans la position de fonctionnement horizontale ou modérément inclinée.

10. Imprimante (1) selon l'une des revendications 1 à 5, **caractérisée en ce que** l'imprimante (1) comprend des éléments de fixation murale pour fixer de manière amovible l'imprimante (1) à un mur dans la position de fonctionnement verticale et pour fournir les connexions d'énergie et de données à l'imprimante fixée au mur (1).

11. Imprimante (1) selon l'une des revendications 1 à 5, **caractérisée en ce que** l'imprimante (1) peut également fonctionner dans une configuration autonome dans la position de fonctionnement horizontale sur une surface de comptoir ou de table, et que l'imprimante (1) est équipée à cet effet de prises de connecteur pour un câble d'alimentation et un câble de données.
